# EUROPEAN PATENT APPLICATION

(11) **EP 3 982 117 A1**
(43) Date of publication of application: **13.04.2022**
(21) Application number: 20201138.3
(22) Date of filing: 09.10.2020
(51) Int. Cl.: G01N 23/20025, G01N 23/207

(54) **FLEXIBLE SAMPLE HOLDER**

(71) Applicant: Merck Patent GmbH, 64293 Darmstadt (DE)
(72) Inventor: HIERSE, Wolfgang, 64293 Darmstadt (DE)
(74) Representative: Merck Serono S.A. Intellectual Property

(57) **Abstract**

Described herein is a sample holder for use in the Crystalline Sponge (CS) method of introducing an analyte in a CS crystalline material for crystallographic structure analysis of the analyte. The sample holder is suitable for use during the entire method of soaking (i.e. introducing the analyte into the CS crystalline material and any subsequent steps including the X-ray crystallographic analysis of the material.

## Description

### Field of the Invention

The present invention relates to a flexible sample holder, which tool is used to manipulate crystalline material for use in X-ray crystallography methods. Particularly the present invention relates to such sample holders for use in manipulating crystalline polynuclear metal complexes with or without an analyte for X-ray crystallography structure elucidation.

### Background

X-ray single crystal structure analysis has been known as a method for determining the molecular structure of an organic compound. The molecular structure of an organic compound can be accurately determined using X-ray single crystal structure analysis when it is possible to prepare a high-quality single crystal.

The Crystalline Sponge (CS) method is a method of preparing an X-ray crystallographic sample analyte by introducing an analyte into a porous crystalline polynuclear metal complex in an ordered manner. The X-ray crystal structure analysis of the analyte can be carried out through X-ray crystallography with the complex of analyte and crystalline polynuclear metal complex. The crystalline polynuclear metal complex (CS) material for use in the CS method is used in the form of small single crystals of ca. 0.1 mm diameter. These crystals are first exposed to a solution of analyte, typically in an organic solvent, under suitable conditions, to integrate the analyte molecules into the pores of the CS lattice ("soaking"), and then mounted into the SC-XRD instrument for structure determination ("measuring").

Since the CS crystals are small, their handling as loose objects is non-trivial and requires a microscope. Improved handling and manipulation could be achieved if such CS crystal could be used in pre-mounted form. As such the CS crystals could be handled and manipulated more easily both during the soaking and measuring steps as well as in transferring between these steps, and in general for delivery and transport. A suitable sample holder for the CS crystalline materials would provide such support for using the CS crystals in pre-mounted form.

Such suitable sample holder would need to fulfill several requirements. For example, manual handled should be convenient, the sample holder should be suitable to be directly mounted into the SC-XRD instrument through standardized magnetic attachment, and those parts of the sample holder close to the mounted CS material must not interfere with the CS's diffraction pattern of the CS material. With respect to the last point the X-ray scattering background should be diffuse and weak. This means, the materials used should ideally be thin, non-crystalline, and composed of light elements. Current designs of commercially available sample holders fulfill these requirements.

However, specifically for crystalline sample material prepared in the CS method there are the following additional requirements arising from the application of the sample holder in the soaking step. These additional requirements include that the connection between the crystal and the sample holder must withstand immersion into and extraction from liquids, especially various types of organic solvents at various temperatures. Further, the materials of the sample holder itself must withstand the same conditions. Specifically, they must not be dissolved, chemically altered, softened or deformed by contact with organic solvents, even at elevated temperatures. In addition, no low-molecular components must be extracted or leached out from these materials of the sample holder by exposure to the aforementioned conditions. Such low-molecular components could enter the CS in the place of the analyte and therefore detrimentally interfere with the analytical process.

The majority of currently commercially available sample holders keep a crystalline analyte in place largely through surface adhesion between the crystal and the sample holder's mounting tip. To strengthen this adhesion, various oils, fats and glues may additionally be applied. Such designs for sample holders include; Fixed-size fiber loop designs (e.g. CryoLoop^{™} by Hampton Research); Fixed-size rigid ring designs (e.g. MicroLoops^{™} and MicroMounts^{™} by Mitegen); Straight pins (e.g. Glass Fibers by Hampton Research); Meshes (e.g. MicroMeshes^{™} by Mitegen); and Loops with inward-looking spines; here operated in "scooping mode", e.g. as flat supports of crystals (e.g. MicroGrippers^{™} by Mitegen).

This mechanism of positional fixation cannot be expected to withstand exposure to organic solvents, since the surface tension forces associated with liquid immersion and extraction may overcome the surface adhesion between the crystal and the sample holder. Moreover, oils, fats and glues may be dissolved by certain organic solvents, and low-molecular components thereof may soak into the CS materials.

Some commercially available sample holders include a ring-shaped structure which applies radial inward pressure to hold the crystal in place. These include for example; Loops with inward-looking spines operated in "gripping mode" (e.g. MicroGrippers^{™} by Mitegen); and Variable-size fiber loop designs that can be constricted to fixate the crystal. While such sample holder may more stably fixate the crystal in two dimensions, the crystalline material may still be unstable against displacements perpendicular to the ring or loop plane.

Thus, there is a need, for purposes of the CS method, to provide a different way of holding the CS crystalline material in place which will stably fixate the CS material in all three dimensions.

### Summary of the Invention

The current invention provides a solution to the above described problems in having a sample holder for use with the CS method wherein the crystalline material is held in place by the force of mechanical elastic strain. The sample holder of the present invention provides such solution ensuring that the CS crystalline material remains fixated in the sample holder during the soaking and determining steps as well as during transfer between steps.

In one embodiment, the present invention provides a sample holder for CS crystalline material comprising: a.) a first element comprising a rod connected to a holding element, b.) a second element opposing the first element, wherein at least a portion of the second element covers the entire area of the holding element, and c.) a connector element fixedly connecting the first element to the second element, wherein the holding element comprises a loop surrounding an enclosed space, the enclosed space being covered at least partially either by three or more inward-directed spines connected to the loop or a material having one or more cut-outs, and wherein at least one of the rod and the holding element are flexible.

In one embodiment of the present invention, the sample holder comprises a first element comprising a holding element and a second element covering at least the holding element, wherein at least the portion of the second element covering the area of the holding element is a rigid surface.

In another embodiment of the present invention, the sample holder comprises a first element comprising a holding element and a second element covering at least the holding element, wherein the second element comprises a rod connected to a holding element wherein the holding element comprises a loop surrounding an enclosed space, the enclosed space being at least partially covered either by three or more inward-directed spines connected to the loop or a material having one or more cut-outs.

### Brief Description of the Drawings

Figure 1: Shows an embodiment of a flexible sample holder comprising a first element having a holding element and a second element which is a solid element covering at least the entire area of the holding element. In Figure 1A an overview is shown including a CS crystalline material, Figure 1B shows in perspective the flexible holding element fixating the CS crystalline material to the second element.
Figure 2: Shows an embodiment of a flexible sample holder comprising a first and second element which first and second element both comprise a holding element.

### Detailed Description of the Invention

Tools which enable the manipulation of CS crystalline material during soaking in an appropriate solvent with an analyte and at the same time enable fixation for crystallographic analysis on the CS crystalline material and analyte are currently not available. The present invention provides a solution wherein the CS crystalline material is held in place by force of mechanical elastic strain. Such mechanical elastic strain is exerted on the CS crystalline materials through a flexible sample holder, and in particular through a holding element. This holding element comprises elastic materials which exerts a force on the CS crystalline material of sufficient force to positionally fixate the CS crystalline material while the elastic materials are resistant to the soaking conditions.

As such in one embodiment a mechanically rigid part supports the CS crystalline material from one direction. From the opposite direction, at least one additional, mechanically elastic part will exert a force pressing the CS crystalline material onto the opposing rigid part. Alternatively, the CS crystalline material is held in place by at least two elastic parts, exerting opposing forces on the CS crystalline material and thereby keeping it in the equilibrium position between the two elastic parts. In both embodiments, the crystal is stabilized against movement perpendicular to the direction of the compressive force either by its mechanical friction with the at least two different parts touching it, or more preferably by additional mechanical barriers presented by the shape of one or both of the at least two different parts touching it.

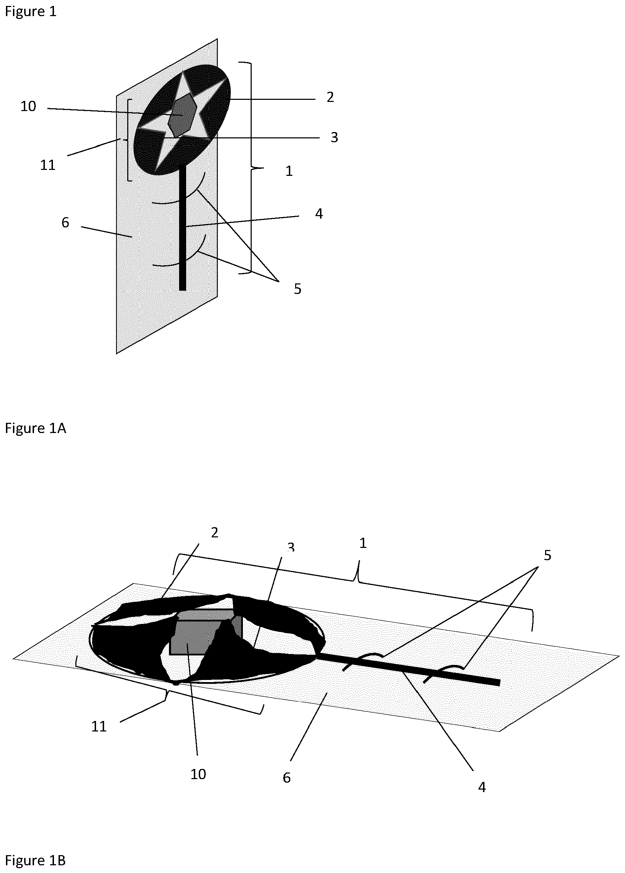

The sample holder according to the present invention as shown in for example Figure 1 enables positionally fixating the CS crystalline material during soaking of the CS crystalline material with an analyte and the subsequent process of crystallographic analysis (and any steps in between) within the same sample holder. In an embodiment of the sample holder as shown in Figure 1A, the sample holder comprises a first element (1) which comprises a rod or rod-like element (4) connected with a holding element (11). The sample holder further comprises a second element (6) which covers at least the area encompassing the opposing holding element (11). The first element (1) and the second element (6) are connected to each other for example using one or more connector element(s) (5) to secure/fix the first and second elements to each other.

The holding element (11) comprises a loop (2) surrounding an enclosed space. The enclosed space being (at least partially) covered by three or more inward-directed spines (3) connected to the loop (2) or a flexible material with optionally having one or more cut-outs. Any one of the loop (2), inward-directed spines (3), the material with optionally having one or more cut-outs or a combination thereof are of flexible, preferably elastic material. For example, the loop (2) can be rigid and the inward-directed spines (3) are of elastic material. One such embodiment is shown in Figure 1B wherein the second element (6) covering the holding element (11) is of a rigid material and the CS crystalline material (10) is held in place by the mechanic forces exerted on this CS crystalline material by the elastic material of the inward-directed spines (3). In the case shown in Figure 1B the loop (2) is of rigid material but could also be of elastic material to result in a more snug and contoured fit around the CS crystalline sponge material (10). A similar configuration would apply wherein the space enclosed by loop (2) is covered by flexible material optionally with one or more cut-outs (configuration not shown).

In the embodiment as shown in Figures 1A and B the second element (6) covering the area of the holding element (11) comprises a rigid surface, preferably the second element is a rigid or solid element.

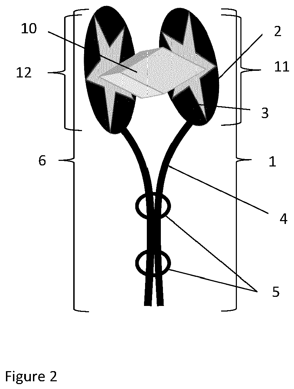

Alternatively, the second element comprises a rod or rod-like structure (4) connected to a holding element (12) as shown in Figure 2. The holding elements (11) and (12) can be the same but may be of different shape and/or material as long as the area of holding element (12) covers the enclosed space encompassed by the holding element (11) or covers the area of holding element (11). Like in the embodiment as shown in Figure 1 the embodiment as shown in Figure 2 the sample holder comprises a first element (1) comprising a rod or rod-like structure (4) connected to holding element (11). The sample holder further comprises a second element (6) opposing the first element (1) and least a portion of the area of such second element (6) covers the enclosed space encompassed by the holding element (11) or covers the area of the holding element (11) of the first element (1). In the embodiment in Figure 2 the second element (6) also comprises a rod or rod-like structure (4) and a holding element (12). Both holding elements (11) and (12) comprise of a loop (2) which surrounds an enclosed space. Such enclosed space is at least partially covered by either three or more inward-directed spines (3) or flexible material optionally comprising one or more cut-outs.

It is understood that the flexible material covering the enclosed space surrounded by loop (2) can have any shape which would positionally fixate the CS crystalline material (10). Thus, the flexible material could for example be a mesh, a set of strings or a film-like material.

Further the connecting element (5) can be any connecting means which fixedly connects the first and second elements (1) and (6). For example, the connecting element may be a cord, an adhesive or a clip.

To facilitate contact of the CS crystalline material with the analyte solution during soaking, one or several of the different parts touching it can preferably be structured with openings, holes or pores or be composed of intrinsically porous or permeable material.

The preferred material, such as for the three or more inward-directed spikes (3) and/or the material covering the enclosed space surrounded by loop (2), is an elastic material. The loop (2) may also be of elastic material or a sufficiently rigid material able to maintain a loop structure. The elastic component(s) is (are) preferably a polymer. Such polymer would also be resistant to organic solvents, even at elevated temperature of 50°C or more. In addition, the elastic polymer material must be free of any low-molecular components such as monomers, plasticizers, colorants, or chemical reaction or decomposition products that might absorb into the CS crystalline material in the place of the analyte, interfering with the analytic process and potentially leading to an incorrect or inaccurate crystal structure analysis for the analyte.

The solvents to which such polymer material is exposed to are those solvents that are typically applied for in storage and during soaking of CS crystalline material. These solvents include, cyclic aliphates, n-alkanes, chlorinated C₁₋₃alkanes, C₂₋₅ ketones, C₁₋₄alcohols, C₂₋₄ esters, tetrahydrofurane, acetonitrile, MTBE, diethylformamide (DMF), aromatic aliphates such as for example toluene, dimethyl amine, ethyleneglycol, and dimethoxyethane (DME).

In terms of high resistance to the aforementioned solvents, fluorinated polymers such as polytetrafluoroethylene (PTFE, Teflon^{®}), polyvinylidenedifluoride (PVDF) and ethylene-chlorotrifluoroethylene copolymer (ECTFE, Halar^{®}) are suitable. High-density, high molecular weight grades of polyethylene (PE) and polypropylene (PP) also offer strong solvent resistance, as well as polyphenylenesulfide (PPS) and polyether-etherketone (PEEK). The preferred choice here, however, are polyimides (Kapton^{®}) or polyimide-polyamides (Tecator^{®}, Torlon^{®}). The polymer commercially known as Kapton^{®} has the especially preferred property profile of not being attacked by any known organic solvent, as well as being highly amorphous such as to contribute a weak and mostly diffuse background that does not adversely interfere with X-ray diffraction.

The preferred material of the rigid component can also be a suitably rigid polymer of the above types, or glass or a glass-like inorganic material. If glass is used, its thickness should preferably not exceed the wall thickness of typical glass capillaries used for mounting X-ray diffraction samples, i.e. about 10 µm, in order not to appreciably interfere with the X-ray by absorption or diffraction.

## Claims

1. A sample holder for crystalline sponge comprising:
a. a first element comprising a rod connected to a holding element, wherein the holding element comprises a loop surrounding an enclosed space,
b. a second element opposing the first element, wherein at least a portion of the second element covers the enclosed space encompassed by the holding element or the area of the holding element, and
c. a connector element fixedly connecting the first element to the second element,
wherein the enclosed space is being covered at least partially either by three or more inward-directed spines connected to the loop or a material having one or more cut-outs, and wherein at least one of the rod and the holding element are flexible.

2. The sample holder according to claim 1, wherein at least the portion of the second element covering the area of the holding element is a rigid surface.

3. The sample holder according to claim 1 or 2, wherein the second element is a rigid and solid element.

4. The sample holder according to claim 1, wherein the second element comprises a rod connected to a holding element wherein the holding element comprises a loop surrounding an enclosed space, the enclosed space being at least partially covered either by three or more inward-directed spines connected to the loop or a material having one or more cut-outs.

5. The sample holder according to claim, 4, wherein the holding element of the second element covers the enclosed space encompassed by the holding element of the first element or covers the area of holding element of the first element.

6. The sample holder according to any of the preceding claims, wherein the holding element(s) and spines are of elastic polymer material.

7. The sample holder according to claim 6, wherein the polymer material is resistant to organic solvents, is resistant to temperatures above 50°C and is substantially free of low-molecular weight components.

8. The sample holder according to claim 7, wherein the organic solvents comprise cyclic aliphates, n-alkanes, chlorinated C₁₋₃ alkanes, C₂₋₅ ketones, C₁₋₄alcohols, C₂₋₄esters, tetrahydrofurane, acetonitrile, MTBE, diethylformamide (DMF), aromatic aliphates such as for example toluene, dimethyl amine, ethyleneglycol, and dimethoxyethane (DME).

9. The sample holder according to any one of claims 6 to 8, wherein the polymer is selected from fluorinated polymers (such as polytetrafluoroethylene (PTFE, Teflon^{®}), polyvinylidenedifluoride (PVDF) and ethylene-chlorotrifluoroethylene copolymer (ECTFE, Halar^{®})), High-density, high molecular weight grades of polyethylene (PE) and polypropylene (PP), polyphenylenesulfide (PPS), polyether-etherketone (PEEK), polyimides and polyimide-polyamides.

10. The sample holder according to claim 9, wherein the polymer is a polyimide or polyimide-polyamide.

11. The sample holder according to claim 10, wherein the polymer is Kapton^{®}.

12. The sample holder according to any of claims 1 to 3, wherein the rigid and solid material is selected from the group consisting of polymers and glass or glass-like inorganic materials.

13. The sample holder according to claim 12, wherein the polymer is selected from fluorinated polymers (such as polytetrafluoroethylene (PTFE, Teflon^{®}), polyvinylidenedifluoride (PVDF) and ethylene-chlorotrifluoroethylene copolymer (ECTFE, Halar^{®})), High-density, high molecular weight grades of polyethylene (PE) and polypropylene (PP), polyphenylenesulfide (PPS), polyether-etherketone (PEEK), polyimides and polyimide-polyamides.

14. The sample holder according to claim 13, wherein the polymer is a polyimide or polyimide-polyamide.

15. The sample holder according to claim 14, wherein the polymer is Kapton^{®}.
